# EUROPÄISCHE PATENTSCHRIFT

(11) **EP 4 406 101 B1**
(45) Veröffentlichungstag und Bekanntmachung des Hinweises auf die Patenterteilung: **04.02.2026**
(21) Anmeldenummer: 22755113.2
(22) Anmeldetag: 21.07.2022
(51) Int. Cl.: H02K 9/197, H02K 7/116, B60K 1/00, F16H 57/04

(54) **KÜHLMITTELVERSORGUNG FÜR EINEN ELEKTRISCHEN FAHRZEUGACHSANTRIEB**
COOLANT SUPPLY FOR AN ELECTRIC VEHICLE AXLE DRIVE
ALIMENTATION EN FLUIDE DE REFROIDISSEMENT POUR UN ENTRAÎNEMENT D'ESSIEU DE VÉHICULE ÉLECTRIQUE

(30) Priorität: 28.10.2021 DE 102021128081
(43) Veröffentlichungstag der Anmeldung: 31.07.2024
(73) Patentinhaber: Audi AG, 85045 Ingolstadt (DE)
(72) Erfinder: GREITER, Ivo, 85117 Eitensheim (DE)
(74) Vertreter: Bierschneider, Walter
(86) Internationale Anmeldenummer: PCT/EP2022/070475
(87) Internationale Veröffentlichungsnummer: WO 2023/072442

(56) Entgegenhaltungen:
- WO-A1-2020/213508
- DE-B4- 102019 117 893
- DE-T5- 112020 002 018
- US-A1- 2004 134 693

## Beschreibung

Die Erfindung betrifft einen elektrischen Fahrzeugachsantrieb nach dem Oberbegriff des Anspruches 1.

Ein solcher Fahrzeugachsantrieb kann eine nasslaufende Elektromaschine aufweisen, in der der Stator, insbesondere die Wickelköpfe der Statorwicklungen, sowie der Rotor aktiv gekühlt werden.

In einer beispielhaften Kühlmittelversorgung für einen elektrischen Fahrzeugachsantrieb weist die Elektromaschine ein Elektromaschinengehäuse auf, in dem ein Stator mit einem Rotor zusammenwirkt. Mit Hilfe des Kühlmittelversorgungssystems erfolgt eine Statorkühlung, bei der das Kühlmittel zumindest in einen Wickelkopfraum der Elektromaschine geführt wird. Der Wickelkopfraum in der Elektromaschine erstreckt sich in Radialrichtung zwischen der radial inneren Rotorwelle und einer radial äußeren zylindrischen Wandung des Elektromaschinengehäuses. In Axialrichtung erstreckt sich der Wickelkopfraum zwischen einer Stirnwand des zylindrischen Elektromaschinengehäuses und einer Stirnseite der Stator/Rotor-Anordnung. Im Elektromaschinenbetrieb bewegt sich im Wickelkopfraum der Elektromaschine ein Kühlmittel/Luft-Gemisch in Wirbelströmung um die Rotorwelle.

Aus der DE 10 2019 117 893 A1 ist ein gattungsgemäßer, elektrischer Fahrzeugachsantrieb bekannt. Aus der US 2019 0199173 A1 ist eine weitere nasslaufende Elektromaschine bekannt. Die US 2004/134693 A1 offenbart ein Kühlsystem für den Elektromotor eines Fahrzeugs. Aus der WO 2020/213508 A1 sind eine Antriebsvorrichtung und ein Fahrzeugantriebssystem bekannt.

Die Aufgabe der Erfindung besteht darin, einen elektrischen Fahrzeugachsantrieb bereitzustellen, dass im Vergleich zum Stand der Technik konstruktiv einfacher aufgebaut ist und/oder insbesondere eine im Vergleich zum Stand der Technik wirkungsvollere Kühlung der Elektromaschinen- bzw. Getriebekomponenten ermöglicht.

Die Aufgabe ist durch die Merkmale des Anspruches 1 gelöst. Bevorzugte Weiterbildungen der Erfindung sind in den Unteransprüchen offenbart.

Die Erfindung geht von einem elektrischen Fahrzeugachsantrieb aus, der ein Kühlmittelversorgungssystem und eine Elektromaschine aufweist, in deren Elektromaschinengehäuse ein Stator mit einem Rotor zusammenwirkt. Die Elektromaschine treibt über eine Getriebeanordnung auf zumindest ein Fahrzeugrad der Fahrzeugachse ab. Gemäß dem Anspruch 1 ist im Elektromaschinengehäuse eine Kühlmittel-Abtrennung angeordnet. Diese teilt den Innenraum des Elektromaschinengehäuses auf in einen radial äußeren ringförmigen Statorraum, in dem der Stator mit seinen Statorwicklungen angeordnet ist, und in einen davon weitgehend fluiddicht oder strömungsdicht abgetrennten, radial inneren Rotorraum, in den der Rotor angeordnet ist. Auf diese Weise kann der sich im Elektromaschinenbetrieb stark erwärmende Stator zielgerichteter mit Kühlmittel versorgt werden. zudem wird die Kühlmittelversorgung des Statorraums von der sich im Rotorraum bildenden Wirbelströmung entkoppelt. Der Rotor ist daher weniger in Kontakt mit Kühlmittel. Vielmehr können insbesondere die Wickelköpfe des Stators bevorzugt komplett mit Kühlmittel umströmt werden. In diesem Fall kann der Statorraum im Wesentlichen komplett mit Kühlmittel gefüllt sein.

Die Kühlmittel-Abtrennung ist geschlossenflächig (das heißt düsenfrei) ausgebildet und in Dichtkontakt mit den, in Axialrichtung einander gegenüberliegenden Stirnwänden des Elektromaschinengehäuses. Unter einer fluiddichten oder strömungsdichten Abdichtung des Statorraums vom Rotorraum ist nicht notwendigerweise eine hermetische Abdichtung zu verstehen, das heißt eine komplett dichte Abdichtung. Vielmehr kann es im Elektromaschinenbetrieb zu einer geringfügigen Kühlmittel-Leckage durch die Dichtflächen der Kühlmittel-Abtrennung in den Rotorraum kommen. Gegebenenfalls kann die Kühlmittel-Abtrennung auch als ein sogenannter Spalttopf realisiert sein, also aus einem Rohr (zum Beispiel aus Kunststoff), welches zwischen dem Rotor und dem Stator eingezogen wird und wieder axial zum Gehäuse gedichtet wird.

In einer technischen Umsetzung weist das Kühlmittelversorgungssystem einen Stator-Hydraulikkreis und einen Rotor-Hydraulikkreis auf, die zumindest teilweise voneinander strömungstechnisch entkoppelt sind. Im Stator-Hydraulikkreis ist der Statorraum integriert, während im Rotor-Hydraulikkreis der Rotor, insbesondere für eine Rotorinnenkühlung, integriert ist.

Erfindungsgemäß weist der Statorraum zumindest eine Ablaufstelle auf, von der das vom Statorraum abströmende Kühlmittel in ein Kühlmittelreservoir rückführbar ist. Der Rotorraum kann zumindest eine Ablaufstelle aufweisen, von der das vom Rotorraum abfließende Kühlmittel in das Kühlmittelreservoir rückführbar ist. Die Kühlmittelrückführung erfolgt erfindungsgemäß mittels einer Rückführpumpe. Darüber hinaus kann der Statorraum jeweils eine Zulaufstelle aufweisen, in die das Kühlmittel vom Kühlmittelreservoir dem Statorraum zuführbar ist. Die Kühlmittelzufuhr kann insbesondere mittels einer Zuführpumpe unterstützt werden. Hier ist vor allem wichtig, dass der Statorraum komplett mit Öl gefüllt ist - dazu braucht man eine Pumpe, die das Öl dort hinein fördert und der Ablauf muss als Überlauf ausgebildet sein, also oben liegen. Um bei hohen Querbeschleunigungen ein Ablaufen des Öls aus dem Statorraum zu verhindern, muss der Ablauf entweder durch eine Blende oder durch ein Überdruckventil gedrosselt werden.

Die Getriebeanordnung weist ein Getriebegehäuse auf, in dem beispielhaft ein Achsdifferential angeordnet ist. Dessen Eingangsseite kann mit der Elektromaschine verbunden sein, und zwar direkt oder indirekt, etwa zumindest über eine Getriebestufe, die für eine Drehmomentwandlung vorgesehen ist. Die Ausgangsseite des Achsdifferentials ist mit dem zumindest einen Fahrzeugrad der Fahrzeugachse verbunden.

Alternativ oder zusätzlich betrifft die Erfindung das nachfolgend beschriebene Kühlmittelversorgungssystem für einen elektrischen Fahrzeugachsantrieb, der eine Elektromaschine aufweist, in deren Elektromaschinengehäuse ein Stator mit einem Rotor zusammenwirkt. Die Elektromaschine treibt über eine Getriebeanordnung auf zumindest ein Fahrzeugrad der Fahrzeugachse ab. Im Hinblick auf eine Bauraumreduzierung des Kühlmittelversorgungssystems sowie einer Bauteilreduzierung ist erfindungsgemäß vorgesehen, dass das Kühlmittelversorgungssystem keinen separaten Kühlmitteltank aufweist, sondern vielmehr das Getriebegehäuse und vor allem auch das Statorgehäuse in Doppelfunktion als Kühlmittelreservoir wirken. In diesem Fall können zusätzlich auch die Rückführpumpe und/oder die Zuführpumpe unmittelbar im Getriebegehäuse positioniert werden.

Erfindungsgemäß ist vorgesehen, dass die Zuführpumpe und die Rückführpumpe zu einer Zweifachpumpe, bevorzugt mit einer gemeinsamen Antriebswelle, zusammengefasst sind. Die gemeinsame Antriebswelle ist in trieblicher Verbindung mit einem Elektromotor.

Für einen kompakten Fahrzeugachsantrieb ist es bevorzugt, wenn die Elektromaschine im Quereinbau verbaut ist, sodass sich deren Rotorwelle in Fahrzeugquerrichtung, das heißt achsparallel zur Fahrzeugquerachse erstreckt. Zur weiteren Bauraumreduzierung können die Elektromaschine und die Getriebeanordnung in der Fahrzeugquerrichtung nebeneinander angeordnet sein. Zudem kann das Getriebegehäuse unmittelbar am Elektromaschinengehäuse angeflanscht sein.

In einem derart ausgebildeten Getriebegehäuse kann ein nach oben offener Hohlkörper, insbesondere eine Schale, angeordnet sein. Der Hohlkörper schirmt einen kühlmittelfreien, nach oben offenen Bauraum von der im Getriebegehäuse befindlichen Kühlmittelsäule ab. In dem nach oben offenen Bauraum kann zumindest teilweise eine Getriebekomponente, insbesondere das Achsdifferential, angeordnet sein. Auf diese Weise ist im Normalbetrieb verhindert, dass die Getriebekomponente in die, im Getriebegehäuse befindliche Kühlmittelsäule eingetaucht ist.

Das Kühlmittelversorgungssystem kann zusätzlich zum Stator-Hydraulikkreis und zum Rotor-Hydraulikkreis einen Getriebe-Hydraulikkreis aufweisen. Mit dem Getriebe-Hydraulikkreis kann zumindest eine im Getriebegehäuse angeordnete Getriebekomponente in einer Trockensumpfschmierung oder in einer Einspritzschmierung mit Kühlmittel versorgt werden. In diesem Fall wird das Kühlmittel in einer Getriebe-Versorgungsleitung zu einer Getriebekomponenten-Schmierstelle geführt. Die in Trockensumpfschmierung oder in Einspritzschmierung mit Kühlmittel versorgte Getriebekomponente kann bevorzugt in den vom Hohlkörper bereitgestellten Bauraum ragen. In diesem Fall kann das von der Getriebekomponente abtropfende Kühlmittel sich am Boden des Hohlkörpers sammeln und über eine bodenseitige Ablaufstelle in Richtung Kühlmittelreservoir rückgeführt werden, und zwar insbesondere mit Unterstützung der Rückführpumpe. Unter einer Trockensumpfschmierung ist der Sachverhalt zu verstehen, dass ein Raum, das heißt ein Trockensumpf vorhanden ist, in den das im Aggregat ablaufende Öl aktiv rückgeführt wird, also durch eine Pumpe. Beim Nasssumpf läuft es dagegen durch Schwerkraft in einen deshalb notgerungen unten liegenden Bereich (Ölwanne). Beim Nasssumpf können zum Beispiel Zahnräder (im Gegensatz zur Trockensumpfschmierung) durch Eintauchen in das Öl schmieren.

Falls die Einspritzschmierung nicht ausreichen sollte, kann zusätzlich eine Innenbeölung des Achsdifferenzials erfolgen. Dabei ist bevorzugt eine Ölzuführung für die Innenbeölung einer möglichen Abkopplung ermöglicht.

Um auch bei einem Pumpenausfall der Rückführpumpe und/oder der Zuführpumpe eine Kühlmittel-Notversorgung der Getriebekomponente zu gewährleisten, kann folgende Maßnahme bereitgestellt sein: So kann der Hohlkörper einen Notzulauf aufweisen, über den Kühlmittel von der im Getriebegehäuse befindlichen Kühlmittelsäule in den Hohlkörper einströmen kann. Bei einem Pumpenausfall ist somit eine Kühlmittel-Notversorgung der Getriebekomponente gewährleistet. Durch das Einströmen von Kühlmittel über den Notzulauf ergibt sich nämlich in dem Hohlkörper eine Kühlmittelsäule, in die die Getriebekomponente nach Art einer Tauchschmierung eintaucht.

Die Kühlmittel-Abtrennung zwischen dem radial äußeren Statorraum und dem radial inneren Rotorraum kann, wie bereits erwähnt, keine hermetische Abdichtung bereitstellen, sodass sich Leckageverluste ergeben, bei der ein Leckage-Kühlmittel aus dem Statorraum in den Rotorraum eintritt. Das Leckage-Kühlmittel sammelt sich am Boden des Rotorraums, insbesondere innenseitig auf der Kühlmittel-Abtrennung. Um das Leckage-Kühlmittel aus dem Rotorraum zu entfernen, ist am Rotorraum-Boden zumindest eine Rotorraum-Ablaufstelle ausgebildet, über die das Leckage-Kühlmittel, insbesondere mittels der Rückführpumpe, in das Kühlmittelreservoir rückführbar ist. Der Rotor-Hydraulikreis kann speziell für eine Rotorinnenkühlung ausgelegt sein, bei der die Rotorwelle als Hohlwelle ausgebildet ist. Deren Hohlraum kann zumindest teilweise mit Kühlmittel durchströmt werden. Nach erfolgter Rotorinnenkühlung kann das Kühlmittel in den Rotorraum abgeführt werden, wo es sich am Rotorraum-Boden sammelt. Wie bereits erwähnt kann am Rotorraum-Boden zumindest eine Rotorraum-Ablaufstelle ausgebildet sein, über die das Kühlmittel in das Kühlmittelreservoir rückführbar ist.

Mittels der Erfindung wird ein Kühlmittelversorgungssystem mit reduziertem Bauteilaufwand, jedoch unverändert optimalen Wirkungsgrad und Kühlleistung bereitgestellt.

Nachfolgend sind Ausführungsbeispiele der Erfindung anhand der beigefügten Figuren beschrieben.

Es zeigen:
- Figuren 1 und 2: jeweils eine schematische Darstellung eines Kühlmittelversorgungssystems, und
- Figur 3: eine schematische Darstellung eines nicht von der Erfindung umfassten Vergleichsbeispiels.

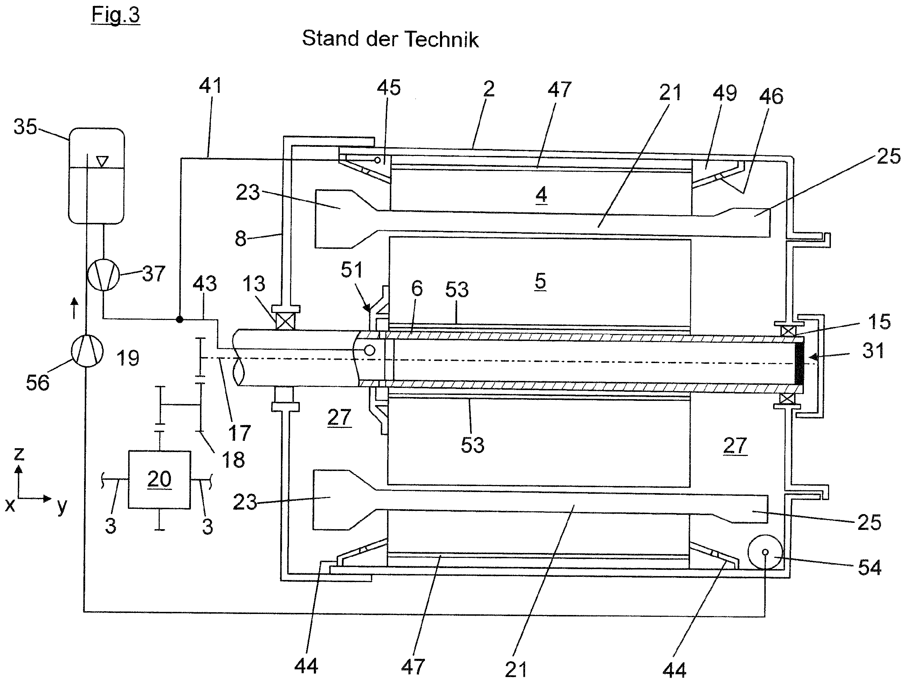

Für einfacheres Verständnis der Erfindung wird zunächst Bezug auf die Figur 3 genommen, in der in grob schematischer Darstellung eine Antriebsvorrichtung für eine Fahrzeugachse eines zweispurigen Fahrzeugs angedeutet ist. Die Antriebsvorrichtung weist eine Elektromaschine auf, die beispielhaft im Quereinbau achsparallel zu den, zu den Fahrzeugrädern geführten Flanschwellen 3 angeordnet ist. In einem Gehäuse 2 der Elektromaschine ist Stator 4 mit einem damit zusammenwirkenden Rotor 5 angeordnet. Die Rotorwelle 6 ist an axial gegenüberliegenden Gehäusewänden 8, 9 des Elektromaschinen-Gehäuses 2 in Lageröffnungen unter Zwischenordnung von Drehlagern 13, 15 drehgelagert.

Die Rotorwelle 6 der Elektromaschine ist drehfest mit einer Getriebeeingangswelle 17 einer Getriebeanordnung 19 verbunden sein, die auf die beiden Flanschwellen 3 abtreibt. In der Figur 3 ist die Getriebeanordnung 19 aus einer Getriebestufe 18 und einem Achsdifferenzial 20 aufgebaut.

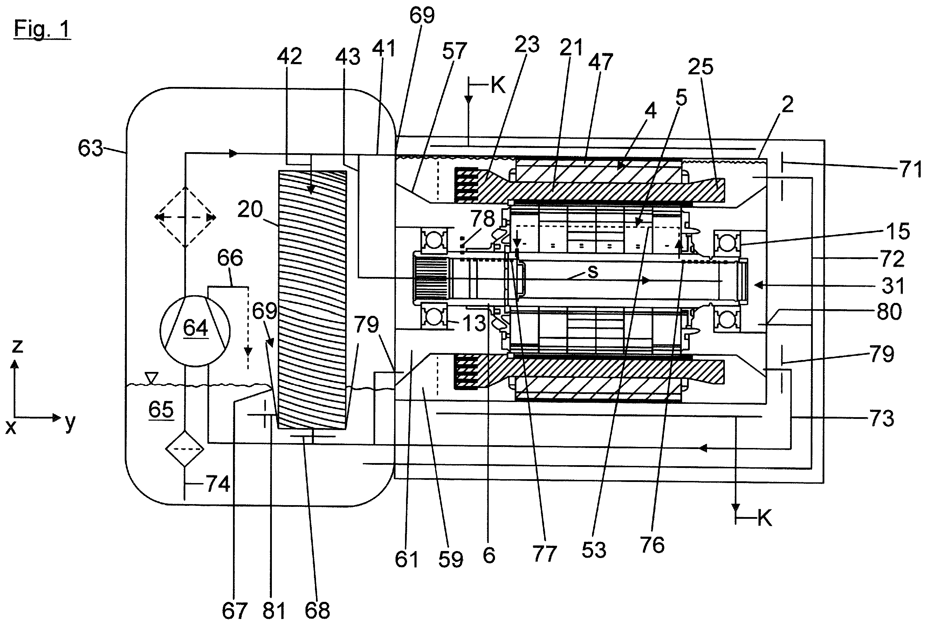

In der Figur 3 weist der Stator 4 eine Vielzahl von Statorwicklungen auf, von denen in der Figur 1 lediglich zwei Statorwicklungen 21 angedeutet sind. Jede Statorwicklung 21 weist axial beidseitig jeweils einen Wickelkopf 23, 25 auf, der in einen Wickelkopf-Raum 27 einragt. Jeder Wickelkopf-Raum 27 ist in einem später beschriebenen Öl-Hydraulikkreis eingebunden, mit dessen Hilfe der jeweilige Wickelkopf-Raum 27 mit Öl beaufschlagbar ist, um die Wickelköpfe 23, 25 des Stators 4 zu kühlen. In jedem der Elektromaschinen-Räume 27 bewegt sich ein Öl/Luftgemisch in Wirbelströmung um die sich mit hoher Drehzahl drehende Rotorwelle 5.

In der in der Figur 3 rechten Lageranordnung ist ein Wellenende der Rotorwelle 6 in einem Nabenabschnitt 31 über ein Drehlager 15 drehgelagert.

Der Öl-Hydraulikkreis weist einen Öltank 35 auf, der über eine Saugleitung mit einer Zuführpumpe 37 verbunden ist. Von der Zuführpumpe 37 führt eine Druckleitung zu Öl-Versorgungsleitungen 41, 43. Mittels der Versorgungsleitung 41 wird Öl in einen radial äußeren umlaufenden Ringspalt 45 gespeist. Von dort wird das Öl über radial äußere Statorkanäle 47 zu einem weiteren Ringspalt 49 im rechten Wickelkopf-Raum 27 geführt. Die beiden Ringspalte 45, 49 sind über Ölspritzringe 44 vom jeweiligen Wickelkopf-Raum 27 getrennt. Jeder der Ölspritzringe 44 weist in Umfangsrichtung verteilte Düsen 46 auf, über die Öl in den jeweiligen Wickelkopf-Raum 27 einspritzbar ist. Mittels der Versorgungsleitung 43 wird Öl durch die Rotorwelle 6 geführt und über eine Strömungsverbindung 51 in radial inneren Rotorkanälen 53 bis in den rechten Wickelkopf-Raum 27 geleitet. Am Gehäuseboden des Elektromaschinen-Gehäuses befindet sich in der Figur 3 eine Absaugung 54, über die sich am Gehäuseboden sammelndes Öl mit Hilfe einer Rückführpumpe 56 in den Öltank 35 rückführbar ist.

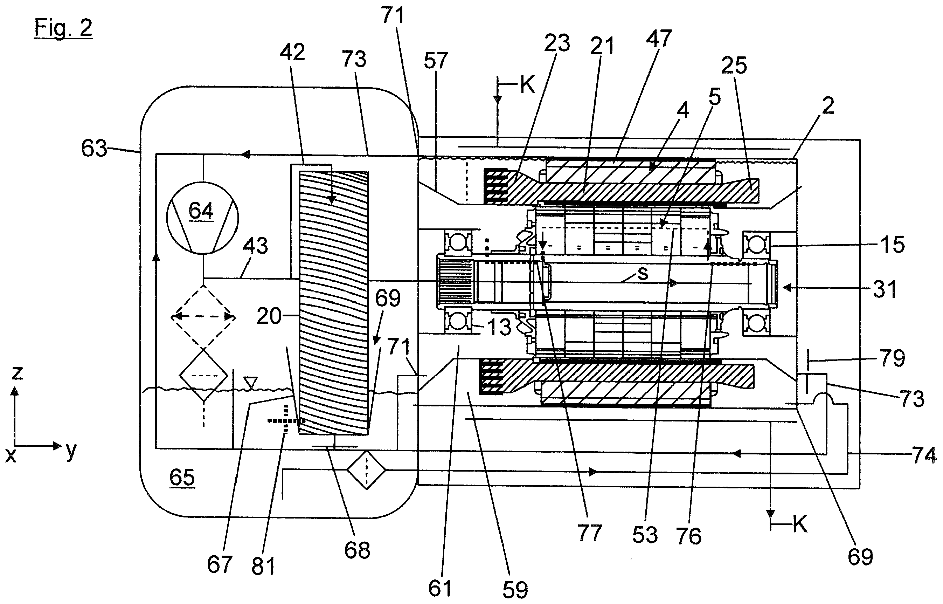

Im Unterschied zur Figur 3 wird in der Figur 1 oder 2 erfindungsgemäß der Stator 4 mit seinen Wickelköpfen 23, 25 nicht mehr mittels einer Luft/Öl-Wirbelströmung gekühlt. Vielmehr ist der Innenraum des Elektromaschinengehäuses 2 mit Hilfe einer Kühlmittel-Abtrennung 57 aufgeteilt in einen radial äußeren ringförmigen Statorraum 59 und in einen radial inneren Rotorraum 61. Im Statorraum 59 ist der Stator 4 mit seinen Statorwicklungen 21 positioniert, während davon fluiddicht abgetrennt im radial inneren Rotorraum 61 der Rotor 5 angeordnet ist. Erfindungsgemäß kommt daher der Stator 4 nicht mehr in Kühlkontakt mit einer sich im Rotorraum 61 bildenden Wirbelströmung. Vielmehr wird in der Figur 1 der Statorraum 59 im Elektromaschinenbetrieb komplett mit dem Kühlmittel gefüllt, so dass speziell die Wickelköpfe 23, 25 vollständig von Kühlmittel umströmt sind, wodurch sich ein im Vergleich zur Wirbelstrom-Kühlung besserer Wirkungsgrad einstellt. Der Kern der Erfindung besteht jedoch erstens darin, das Kühlmittel im Aggregat an einer Stelle (das heißt im Statorraum 59) unterzubringen, an der es ohnehin gebraucht wird. Zweitens wird mit der Erfindung das Kühlmittel weitgehend aus dem Rotorraum 61 ferngehalten. Beim Einsatz der aus dem Stand der Technik bekannten Spritzölkühlung aus Fig 3 besteht nämlich ein Problem darin, dass je nach Temperatur des Kühlmittels sehr unterschiedliche Mengen an Kühlmittel an der Wicklung hängenbleiben. Um eine ausreichende Menge an Kühlmittel für die Druckpumpe bereitzustellen, muss daher vergleichsweise viel Kühlmittel eingefüllt werden.

Wie aus der Figur 1 hervorgeht, ist die Elektromaschine analog zur Figur 3 im Quereinbau im Fahrzeug verbaut, und zwar mit einer in der Fahrzeugquerrichtung y, das heißt achsparallel zur Fahrzeugachse, verlaufenden Rotorwelle 6. Zudem sind in der Figur 1 die Elektromaschine und die Getriebeanordnung 19 in der Fahrzeugquerrichtung y nebeneinander angeordnet. Das Getriebegehäuse 63 der Getriebeanordnung 19 ist ferner unmittelbar an das Elektromaschinengehäuse 2 angeflanscht. Im Getriebegehäuse 63 ist die Getriebeanordnung 19 positioniert, die gemäß der Figur 3 die Getriebestufe 18 sowie das Achsdifferenzial 20 aufweist.

Ein Kern der Erfindung besteht darin, dass auf einen separaten Öltank (Bezugsziffer 35 in der Figur 3) verzichtet wird und anstelle dessen das Getriebegehäuse 63 in Doppelfunktion zusätzlich auch als Öltank bzw. als Kühlmittelreservoir wirkt, in dem sich eine Ölsäule 65 bildet. Zudem sind die in der Figur 3 gezeigten Zuführpumpe 37 und Rückführpumpe 56 zu einer gemeinsamen Zweifachpumpe 64 zusammengefasst. In der Zweifachpumpe 64 werden die Zuführ- und Rückführpumpen 37, 56 mit einer gemeinsamen (nicht gezeigten) Antriebswelle von einem Elektromotor angetrieben.

Wie aus der Figur 1 weiter hervorgeht, ist im Getriebegehäuse 63 bodenseitig als Hohlkörper eine nach oben offene Schale 67 positioniert, die einen kühlmittelfreien, nach oben offenen Bauraum 69 von der Ölsäule 65 abschirmt. In den Bauraum 69 ragt teilweise das Achsdifferenzial 20 ein. Im Normalfall erfolgt eine Einspritzschmierung, in der Öl über die Getriebe-Versorgungsleitung 42 in Richtung Achsdifferenzial 20 geführt wird. Das von dem Achsdifferenzial 20 abtropfende Kühlmittel sammelt sich am Boden der Schale 67 und wird von dort über eine Ablaufstelle 68 in eine Rückführleitung 73 geleitet, die an die Saugseite der Zweifachpumpe 64 angeschlossen ist.

Im Elektromaschinenbetrieb wird mittels der Zweifachpumpe 64 Öl über die Versorgungsleitung 41 an einer getriebenahen Zulaufstelle 69 in den Statorraum 59 eingespeist. An einer axial gegenüberliegenden, getriebefernen Ablaufstelle 71 wird das Öl aus dem Statorraum 59 abgeführt. Die getriebeferne Statorraum-Ablaufstelle 71 kann als eine Blende, eventuell auch als ein Überdruckventil, realisiert sein. Die Statorraum-Ablaufstelle 71 ist zudem über eine erste Rückführleitung 72 in Strömungsverbindung mit der im Getriebegehäuse 63 befindlichen Ölsäule 65, in die hinein die erste Rückführleitung 72 mündet. Zudem kann sich innerhalb des Nabenabschnitts 31 des getriebefernen Drehlagers 15 Öl ansammeln, das über eine weitere Ablaufstelle 80 ebenfalls in die erste Rückführleitung 73 führbar ist.

In der Figur 1 wird mit Hilfe des Kühlmittelversorgungssystems eine Rotorinnenkühlung durchgeführt, bei der sich die in der Figur 1 skizzierte Ölführung S ergibt. Die Ölführung S in der Rotorwelle 6 ist so ausgestaltet, dass sowohl das getriebenahe Lager 13 als auch das getriebeferne Lager 15 von innen gekühlt werden. Ziel der Ölführung S ist ein möglichst geringer Temperaturunterschied zwischen dem Innenring und dem Außenring des jeweiligen Lager 13, 15.

Gemäß der Ölführung S wird über die Versorgungsleitung 43 das Öl in den Hohlraum der als Hohlwelle ausgeführten Rotorwelle 6 eingespeist, und zwar bis auf axialer Höhe des getriebefernen Drehlagers 15. Von dort wird das Öl an einer getriebefernen Strömungsverbindung 76 in die Rotorkanäle 53 geleitet. In den Rotorkanälen 53 strömt das Öl im weiteren Verlauf in gegenläufiger Richtung bis zu einer getriebenahen Strömungsverbindung 77, an der das Öl wieder in den Hohlraum der Rotorwelle 6 rückgeführt wird. Das rückgeführte Öl wird von der Rotorwelle 6 über eine Ablaufstelle 78 in den Rotorraum 61 geführt. Dort sammelt sich das Öl am Rotorraum-Boden, von wo es über beidseitig des Elektromaschinengehäuses 2 ausgebildete Rotorraum-Ablaufstellen 79 in die zweite Rückführleitung 73 geleitet wird. Diese ist an die Saugseite der Zweifachpumpe 64 angeschlossen.

Die Zweifachpumpe 64 weist in der Figur 1 auf ihrer Druckseite eine Steigleitung 66 auf, über die das rückgeführte Öl in das Getriebegehäuse 63 gespeist wird. Zudem ist an der Saugseite der Zweifachpumpe 64 eine Saugleitung 74 angeschlossen, die strömungstechnisch in Verbindung mit der Ölsäule 65 ist.

Wie aus der Figur 1 weiter hervorgeht, ist an einer Wandung der Schale 67 ein Notzulauf 81 ausgebildet, über den Öl von der im Getriebegehäuse 63 befindlichen Kühlmittelsäule 65 in die Schale 67 einströmen kann. Bei einem Pumpenausfall wird somit eine Kühlmittel-Notversorgung des Achsdifferenzials 20 gewährleistet, bei der sich in der Schale 67 eine Kühlmittelsäule bildet, in die das Achsdifferenzial 20 wie bei einer Tauchschmierung eintauchen kann. In der Figur 1 ist der Notzulauf 81 eine bodenseitige Öffnung in der Schale 67. Alternativ dazu kann der Notzulauf 81 auch als eine obere Überlaufkante der Schale 67 realisiert sein.

In der Figur 2 ist ein Beispiel (nicht von der Erfindung umfasst) gezeigt, dessen Aufbau sowie Funktionsweise im Wesentlichen dem Aufbau und der Funktionsweise des ersten Ausführungsbeispiels entspricht. In der Figur 2 ist die ÖI-Strömungsrichtung im Stator-Hydraulikkreis umgekehrt. Das heißt dass an einer getriebenahen Statorraum-Ablaufstelle 71 die Rückführleitung 73 angeschlossen ist. Diese ist an die Saugseite der Zweifachpumpe 64 angeschlossen. Demgegenüber ist an der getriebefernen Statorraum-Zulaufstelle 69 eine Saugleitung 74 angeschlossen, über die das Öl aus der im Getriebegehäuse 63 befindlichen Ölsäule 65 angesaugt wird.

Das Getriebegehäuse 63 kann in der Fahrzeugquerrichtung y derart schmal ausgeführt sein, dass bei Fahrzeug-Querbeschleunigungen die Saugleitung 74 stets in die Kühlmittelsäule 65 eingetaucht ist und dadurch eine Ölansaugung gewährleistet ist. Das Kühlmitteversorgungssystem ist dabei so ausgestaltet, dass die Zweifachpumpe 64 nur über eine einzige Absaugstelle (das heißt Saugleitung 74) Öl aus dem Getriebegehäuse 63 absaugt. Die Absaugstelle ist in der Fahrzeuglängsrichtung x so zu legen, dass Öl bei positiver oder negativer Längsbeschleunigung sicher angesaugt wird und bei anderem Vorzeichen der Beschleunigung in die Schale 67 unter dem Differenzialraum schwappt.

In den Figuren 1 und 2 ist die Elektromaschine zusätzlich in einem Kühlwasserkreislauf K integriert, in dem das Kühlwasser den Außenumfang des Elektromaschinengehäuses 2 umströmt.

### BEZUGSZEICHENLISTE:

- 2: Elektromaschinen-Gehäuse
- 3: Flanschwellen
- 4: Stator
- 5: Rotor
- 6: Rotorwelle
- 8, 9: Gehäusewand
- 11: Lageröffnung
- 13, 15: Drehlager
- 17: Getriebeeingangswelle
- 18: Getriebestufe
- 19: Getriebeanordnung
- 20: Achsdifferenzial
- 21: Statorwicklung
- 23, 25: Wickelkopf
- 27: Elektromaschinen-Raum
- 31: Nabenabschnitt
- 33: Dichtelement
- 35: Kühlmitteltank
- 37: Zuführpumpe
- 41, 42, 43: Versorgungsleitungen
- 44: Ölspritzring
- 45: Ringspalt
- 46: Düsen
- 47: radial äußerer Statorkanal
- 49: Ringspalt
- 51: Strömungsverbindung
- 53: radial innerer Statorkanal
- 54: Absaugung
- 56: Rückführpumpe
- 57: Kühlmittel-Abtrennung
- 59: Statorraum
- 61: Rotorraum
- 63: Getriebegehäuse
- 64: Zweifachpumpe
- 65: Kühlmittelsäule
- 66: Steigleitung
- 67: Hohlkörper
- 68: Hohlkörper-Ablaufstelle
- 69: Statorraum-Zulaufstelle
- 71: Statorraum-Ablaufstelle
- 72: weitere Rückführleitung
- 73: Rückführleitung
- 74: Saugleitung
- 76: getriebeferne Strömungsverbindung
- 77: getriebenahe Strömungsverbindung
- 78: Ablaufstelle
- 79: Rotorraum-Ablaufstelle
- 80: Nabenabschnitt-Ablaufstelle
- 81: Notzulauf
- S: Ölführung bei der Rotorinnenkühlung
- K: Kühlwasserkreislauf

## Patentansprüche

1. Elektrischer Fahrzeugachsantrieb mit einem Kühlmittelversorgungssystem und mit einer Elektromaschine, in deren Elektromaschinengehäuse (2) ein Stator (4) mit einem Rotor (5) zusammenwirkt,
wobei die Elektromaschine über eine Getriebeanordnung (19) auf zumindest ein Fahrzeugrad der Fahrzeugachse abtreibt, und
wobei im Elektromaschinengehäuse (2) eine Kühlmittel-Abtrennung (57) angeordnet ist, die den Innenraum des Elektromaschinengehäuse (2) aufteilt in einen radial äußeren Statorraum (59), in dem der Stator (4) mit seinen Statorwicklungen (21) angeordnet ist, und in einen davon weitgehend fluiddicht abgetrennten, radial inneren Rotorraum (61), in dem der Rotor (5) angeordnet ist, und
wobei der Statorraum (59) eine Ablaufstelle (71) aufweist, von der das vom Statorraum (59) abströmende Kühlmittel in ein Kühlmittelreservoir rückführbar ist,
**dadurch gekennzeichnet,**
**dass** die Kühlmittelrückführung mittels einer Rückführpumpe (56) erfolgt, und
**dass** die Getriebeanordnung (19) ein Getriebegehäuse (63) aufweist, und
**dass** das Getriebegehäuse (63) das Kühlmittelreservoir bildet, in dem sich eine Kühlmittelsäule (65) befindet, und
**dass** eine Zuführpumpe (37) und die Rückführpumpe (56) zu einer gemeinsamen Zweifachpumpe (64) zusammengefasst sind, und
**dass** mittels der Zweifachpumpe (64) Öl über eine Versorgungsleitung (41) an einer getriebenahen Zulaufstelle (69) in den Statorraum (59) einspeisbar ist, und
**dass** an einer axial gegenüberliegenden, getriebefernen Ablaufstelle (71) das Öl aus dem Statorraum (59) abführbar ist.

2. Elektrischer Fahrzeugachsantrieb nach Anspruch 1, **dadurch gekennzeichnet,** das der Statorraum (59) Bestandteil eines Stator-Hydraulikkreises ist, und der Rotorraum (61) Bestandteil eines Rotor-Hydraulikkreises ist, und dass insbesondere der Stator-Hydraulikkreis zumindest teilweise vom Rotor-Hydraulikkreis strömungstechnisch entkoppelt ist.

3. Elektrischer Fahrzeugachsantrieb nach Anspruch 1 oder 2, **dadurch gekennzeichnet, dass** im Getriebegehäuse (63) ein Achsdifferential (20) angeordnet ist, dessen Eingangsseite mit der Elektromaschine verbunden ist, und zwar entweder direkt oder indirekt, etwa über eine Getriebestufe (18) zur Drehmomentwandlung, und dessen Ausgangsseite mit zumindest einem Fahrzeugrad der Fahrzeugachse verbunden ist.

4. Elektrischer Fahrzeugachsantrieb nach Anspruch 3, **dadurch gekennzeichnet, dass** die Rückführpumpe (56) und/oder die Zuführpumpe (37) im Getriebegehäuse (63) angeordnet sind.

5. Elektrischer Fahrzeugachsantrieb nach Anspruch 3 oder 4, **dadurch gekennzeichnet, dass** im Getriebegehäuse (63) ein nach oben offener Hohlkörper (67), insbesondere Schale, angeordnet ist, der einen kühlmittelfreien, nach oben offenen Bauraum (69) von der im Getriebegehäuse (63) befindlichen Kühlmittelsäule (65) abschirmt, und dass insbesondere eine Getriebekomponente, etwa das Achsdifferential (20), in den Bauraum (69) einragt ist.

6. Elektrischer Fahrzeugachsantrieb nach einem der vorhergehenden Ansprüche, **dadurch gekennzeichnet, dass** das Kühlmittelversorgungssystem einen Getriebe-Hydraulikkreis aufweist, in dem zumindest eine im Getriebegehäuse (63) angeordnete Getriebekomponente (20) in einer Trockensumpfschmierung bzw. Einspritzschmierung, insbesondere mittels der Zuführpumpe (37), mit Kühlmittel versorgbar ist, und dass insbesondere bei der Einspritzschmierung das Kühlmittel von einer Getriebe-Versorgungsleitung (42) zu einer Getriebekomponenten-Schmierstelle geführt wird, und dass insbesondere das von der Getriebekomponente (20) abtropfende Kühlmittel sich am Boden des Hohlkörpers (67) sammelt, und dass insbesondere am Boden des Hohlkörpers (67) eine Ablaufstelle (68) ausgebildet ist, über die das Kühlmittel in Richtung Kühlmittelreservoir rückführbar ist, und zwar insbesondere mittels der Rückführpumpe (56).

7. Elektrischer Fahrzeugachsantrieb nach Anspruch 5 oder 6, **dadurch gekennzeichnet, dass** der Hohlkörper (67) einen Not-Zulauf (81) aufweist, über den Kühlmittel von der im Getriebegehäuse (63) befindlichen Kühlmittelsäule (65) in den Hohlkörper (67) einströmt, so dass insbesondere bei einem Pumpenausfall eine Kühlmittel-Notversorgung der Getriebekomponente (20) gewährleistet ist, bei der sich im Hohlkörper (67) eine Kühlmittelsäule bildet, in die die Getriebekomponente (20) eintaucht.

8. Elektrischer Fahrzeugachsantrieb nach einem der vorhergehenden Ansprüche, **dadurch gekennzeichnet, dass** sich am Boden des Rotorraums (61), insbesondere auf der Kühlmittel-Abtrennung (57), ein vom Statorraum (59) austretendes Leckage-Kühlmittel und/oder ein von einer Rotorinnenkühlung abgeführtes Kühlmittel sammelt, und dass insbesondere am Boden des Rotorraums (61) zumindest eine Rotorraum-Ablaufstelle (79) ausgebildet ist, über die das Kühlmittel, insbesondere mittels der Rückführpumpe (56), in das Kühlmittelreservoir rückführbar ist.

9. Elektrischer Fahrzeugachsantrieb nach einem der vorhergehenden Ansprüche, **dadurch gekennzeichnet, dass** der Statorraum (59) im Wesentlichen komplett mit Kühlmittel gefüllt ist, und/oder dass der Rotor-Hydraulikkreis eine Rotorinnenkühlung bewirkt, bei der die Rotorwelle (6) als Hohlwelle ausgebildet ist, deren Hohlraum zumindest teilweise mit Kühlmittel durchströmt ist.

## Claims

1. Electric vehicle axle drive with a coolant supply system and with an electric machine, in the electric machine housing (2) of which a stator (4) interacts with a rotor (5), wherein the electric machine has a drive output by way of a transmission assembly (19) to at least one vehicle wheel of the vehicle axle, and wherein a coolant separator (57) is disposed in the electric machine housing (2), which divides the interior of the electric machine housing (2) into a radially outer stator chamber (59), in which the stator (4) with its stator windings (21) is disposed, and into a radially inner rotor chamber (61) which is separated therefrom in a largely fluid-tight manner and in which the rotor (5) is disposed, and wherein the stator chamber (59) has a drain point (71) from which the coolant flowing from the stator chamber (59) can be recirculated to a coolant reservoir,
**characterized**
**in that** the coolant recirculation is carried out by means of a recirculation pump (56), and
**in that** the transmission assembly (19) has a transmission housing (63), and
**in that** the transmission housing (63) forms the coolant reservoir in which a coolant column (65) is located, and
**in that** a feed pump (37) and the recirculation pump (56) are combined so as to form a common dual pump (64), and
**in that** oil is able to be fed into the stator chamber (59) by means of the dual pump (64) by way of a supply line (41) at a transmission-proximal supply point (69), and
**in that** the oil is able to be discharged from the stator chamber (59) at an axially opposite transmission-distal drain point (71).

2. Electric vehicle axle drive according to Claim 1, **characterized in that** the stator chamber (59) is part of a stator hydraulic circuit, and the rotor chamber (61) is part of a rotor hydraulic circuit, and **in that** in particular the stator hydraulic circuit is at least partially fluidically decoupled from the rotor hydraulic circuit.

3. Electric vehicle axle drive according to Claim 1 or 2, **characterized in that** an axle differential (20) is disposed in the transmission housing (63), the input side of which is connected to the electric machine, specifically either directly or indirectly, for example by way of a gear stage (18) for torque conversion, and the output side of which is connected to at least one vehicle wheel of the vehicle axle.

4. Electric vehicle axle drive according to Claim 3, **characterized in that** the recirculation pump (56) and/or the feed pump (37) are disposed in the transmission housing (63).

5. Electric vehicle axle drive according to Claim 3 or 4, **characterized in that** an open-top hollow body (67), in particular bowl, which shields a coolant-free, open-top installation space (69) from the coolant column (65) located in the transmission housing (63), is disposed in the transmission housing (63), and **in that** in particular a transmission component, such as the axle differential (20), protrudes into the installation space (69).

6. Electric vehicle axle drive according to one of the preceding claims, **characterized in that** the coolant supply system has a gear/hydraulic circuit in which at least one transmission component (20) disposed in the transmission housing (63) is able to be supplied with coolant by dry sump lubrication or injection lubrication, in particular by means of the feed pump (37), and **in that**, in particular during injection lubrication, the coolant is fed from a transmission supply line (42) to a transmission component lubrication point, and **in that** in particular the coolant dripping from the transmission component (20) accumulates at the bottom of the hollow body (67), and **in that** in particular a drain point (68) is formed at the bottom of the hollow body (67), by way of which the coolant is able to be recirculated in the direction of the coolant reservoir, specifically in particular by means of the recirculation pump (56).

7. Electric vehicle axle drive according to Claim 5 or 6, **characterized in that** the hollow body (67) has an emergency supply (81), by way of which coolant flows from the coolant column (65) located in the transmission housing (63) into the hollow body (67), so that, in particular in the event of a pump failure, a coolant emergency supply of the transmission component (20), in which a coolant column is formed in the hollow body (67), into which the transmission component (20) is immersed, is guaranteed.

8. Electric vehicle axle drive according to one of the preceding claims, **characterized in that** a leaking coolant escaping from the stator chamber (59) and/or a coolant discharged from an internal cooling of the rotor accumulates at the bottom of the rotor chamber (61), in particular on the coolant separator (57), and **in that** in particular at least one rotor chamber drain point (79) is formed at the bottom of the rotor chamber (61), by way of which the coolant is able to be recirculated into the coolant reservoir, in particular by means of the recirculation pump (56).

9. Electric vehicle axle drive according to one of the preceding claims, **characterized in that** the stator chamber (59) is substantially completely filled with coolant, and/or **in that** the rotor hydraulic circuit causes internal cooling of the rotor, in which the rotor shaft (6) is formed as a hollow shaft, the cavity of which is at least partially passed through by a flow of coolant.

## Revendications

1. Entraînement d'essieu de véhicule électrique comprenant un système d'alimentation en liquide de refroidissement et comprenant une machine électrique, dans le carter de machine électrique (2) de laquelle un stator (4) coopère avec un rotor (5), la machine électrique entraînant en sortie l'essieu de véhicule par le biais d'un arrangement de transmission (19) sur au moins une roue de véhicule, et une séparation de liquide de refroidissement (57) étant disposée dans le carter de machine électrique (2), laquelle divise l'espace intérieur du carter de machine électrique (2) en un espace de stator (59) radialement extérieur, dans lequel est disposé le stator (4) avec ses enroulements statoriques (21), et en un espace de rotor (61) radialement intérieur, séparé de celui-ci de manière sensiblement étanche aux fluides, dans lequel est disposé le rotor (5), et
l'espace de stator (59) possédant un point d'écoulement (71) à partir duquel le liquide de refroidissement qui s'écoule depuis l'espace de stator (59) peut être renvoyé dans un réservoir de liquide de refroidissement,
**caractérisé en ce que**
le retour du liquide de refroidissement s'effectue au moyen d'une pompe de retour (56), et
l'arrangement de transmission (19) possède un carter de transmission (63), et
le carter de transmission (63) forme le réservoir de liquide de refroidissement dans lequel se trouve une colonne de liquide de refroidissement (65), et
une pompe d'alimentation (37) et la pompe de retour (56) sont combinées pour former une pompe double (64) commune, et
de l'huile peut être injectée dans l'espace de stator (59) au moyen de la pompe double (64) par le biais d'une conduite d'alimentation (41) au niveau d'un point d'amenée (69) proche de la transmission, et
l'huile peut être évacuée de l'espace de stator (59) au niveau d'un point d'écoulement (71) axialement opposé et éloigné de la transmission.

2. Entraînement d'essieu de véhicule électrique selon la revendication 1, **caractérisé en ce que** l'espace de stator (59) et un élément constitutif d'un circuit hydraulique de stator et l'espace de rotor (61) et un élément constitutif d'un circuit hydraulique de rotor, et **en ce que** le circuit hydraulique de stator est notamment découplé au moins partiellement du circuit hydraulique de rotor par technique des fluides.

3. Entraînement d'essieu de véhicule électrique selon la revendication 1 ou 2, **caractérisé en ce qu'**un différentiel d'essieu (20) est disposé dans le carter de transmission (63), dont le côté entrée est relié à la machine électrique, et ce soit directement soit indirectement, par exemple par l'intermédiaire d'un étage de transmission (18) destiné à la conversion de couple, et dont le côté sortie est relié à au moins une roue de véhicule de l'essieu de véhicule.

4. Entraînement d'essieu de véhicule électrique selon la revendication 3, **caractérisé en ce que** la pompe de retour (56) et/ou la pompe d'alimentation (37) sont disposées dans le carter de transmission (63).

5. Entraînement d'essieu de véhicule électrique selon la revendication 3 ou 4, **caractérisé en ce qu'**un corps creux (67) ouvert vers le haut, en particulier une coquille, est disposé dans le carter de transmission (63), lequel protège un espace de montage (69) ouvert vers le haut et exempt de liquide de refroidissement de la colonne de liquide de refroidissement (65) qui se trouve dans le carter de transmission (63), et **en ce que** notamment un composant de transmission, par exemple le différentiel d'essieu (20), fait saillie dans l'espace de montage (69).

6. Entraînement d'essieu de véhicule électrique selon l'une des revendications précédentes, **caractérisé en ce que** le système d'alimentation en liquide de refroidissement possède un circuit hydraulique de transmission, dans lequel au moins un composant de transmission (20) disposé dans le carter de transmission (63) peut être alimenté en liquide de refroidissement dans une lubrification à carter sec ou lubrification par injection, notamment au moyen de la pompe d'alimentation (37), et **en ce que**, en particulier dans le cas de la lubrification par injection, le liquide de refroidissement est conduit d'une conduite d'alimentation de transmission (42) à un point de lubrification de composant de transmission, et **en ce que** le liquide de refroidissement, notamment qui s'écoule du composant de transmission (20) s'accumule au niveau du fond corps creux (67), et **en ce qu'**un point d'écoulement (68) est formé notamment au niveau du fond du corps creux (67), par le biais duquel le liquide de refroidissement peut être renvoyé en direction du réservoir de liquide de refroidissement, et ce notamment au moyen de la pompe de retour (56).

7. Entraînement d'essieu de véhicule électrique selon la revendication 5 ou 6, **caractérisé en ce que** le corps creux (67) possède une amenée de secours (81) par le biais de laquelle du liquide de refroidissement s'écoule de la colonne de liquide de refroidissement (65) située dans le carter de transmission (63) dans le corps creux (67), de sorte qu'une alimentation de secours en liquide de refroidissement du composant de transmission (20) est garantie, notamment dans le cas d'une défaillance de la pompe, avec laquelle une colonne de liquide de refroidissement, dans laquelle est immergé le composant de transmission (20), se forme dans le corps creux (67).

8. Entraînement d'essieu de véhicule électrique selon l'une des revendications précédentes, **caractérisé en ce qu'**un liquide de refroidissement de fuite sortant de l'espace de stator (61) et/ou un liquide de refroidissement évacué d'un système de refroidissement interne de rotor s'accumule au fond de l'espace de rotor (59), notamment sur la séparation de liquide de refroidissement (57), et **en ce qu'**au moins un point d'écoulement d'espace de rotor (79) est formé notamment au niveau du fond de la chambre de rotor (61), par lequel le liquide de refroidissement peut être renvoyé dans le réservoir de liquide de refroidissement, notamment au moyen de la pompe de retour (56).

9. Entraînement d'essieu de véhicule électrique selon l'une des revendications précédentes, **caractérisé en ce que** l'espace de stator (59) est rempli sensiblement complètement de liquide de refroidissement et/ou en ce que le circuit hydraulique de rotor provoque un refroidissement interne du rotor, avec lequel l'arbre de rotor (6) est réalisé sous la forme d'un arbre creux dont la cavité est traversée au moins partiellement par un courant de liquide de refroidissement.
